# FASCICULE DE BREVET EUROPEEN

(11) **EP 2 524 113 B1**
(45) Date de publication et mention de la délivrance du brevet: **13.09.2017**
(21) Numéro de dépôt: 11705014.6
(22) Date de dépôt: 12.01.2011
(51) Int. Cl.: F01D 21/00, F01D 25/28

(54) **STRUCTURE ORIENTABLE DU TYPE ENDOSCOPE**
EINSTELLBARE ENDOSKOPSTRUKTUR
ENDOSCOPE-LIKE ADJUSTABLE STRUCTURE

(30) Priorité: 14.01.2010 FR 1000139
(43) Date de publication de la demande: 21.11.2012
(73) Titulaire: SNECMA, 75015 Paris (FR)
(72) Inventeur: BOUSQUET, Sadia, 77550 Moissy Cramayel Cedex (FR); GAISNON, Patrick, 77550 Moissy Cramayel Cedex (FR); MOZER, Sylvie, 77550 Moissy Cramayel Cedex (FR); SZEWCZYK, Jérôme, 95510 Vienne en Arthies (FR)
(74) Mandataire: Ramey, Daniel
(86) Numéro de dépôt international: PCT/FR2011/050054
(87) Numéro de publication internationale: WO 2011/086324

(56) Documents cités:
- EP-A2- 2 042 076
- EP-A2- 2 119 875
- US-A1- 2003 092 965
- US-A1- 2004 019 252

## Description

La présente invention concerne une structure flexible et orientable destinée à l'inspection interne d'un système mécanique, tel que par exemple une turbomachine, au moyen notamment d'un capteur du type à courants de Foucault ou à ultrasons.

Certaines structures flexibles et orientables actuelles telles qu'un endoscope ou un support d'une sonde de contrôle non destructif, se présentent sous la forme de longs tubes rigides ou élastiquement déformables ayant une extrémité orientable par rapport à leur axe longitudinal pour choisir un angle de positionnement particulier et faciliter la progression de l'endoscope ou du support de la sonde.

Afin de courber de manière adéquate une zone particulière de l'endoscope, on a déjà proposé de disposer le long de sa structure des actionneurs mécaniques tels que des fils de traction ou bien des fils en matériau à mémoire de forme. Ces actionneurs voient leur longueur réduite par traction ou bien sous l'effet d'une augmentation de la température, ce qui induit une modification de la courbure de l'endoscope dans les zones où sont localisés les actionneurs.

Toutefois, ce type de dispositif souffre de limitations dues principalement au manque de mobilité et de manoeuvrabilité dans des espaces géométriquement complexes ou exigus. Par ailleurs, il présente également des limitations en terme de capacité de courbure de l'extrémité de l'endoscope.

Afin de résoudre cette difficulté, la demanderesse a proposé dans sa demande FR 07/06726, de monter l'actionneur sur une partie à rigidité variable du corps longitudinal du dispositif de manière à obtenir un fléchissement faible dans les zones où la rigidité est importante et un fléchissement plus important dans les zones de rigidité plus faible, pour arriver à un profil à courbure variable du dispositif.

Toutefois, les courbures que l'on peut obtenir avec ce type de dispositif ainsi qu'avec ceux mentionnés précédemment restent limitées, ce qui restreint leurs possibilités d'utilisation.

De plus, dans certaines situations d'inspection d'une turbomachine, il peut être souhaitable de réaliser un accrochage stable et fiable du dispositif sur des parties fixes de la turbomachine dans le but d'effectuer un contrôle non destructif et/ou de limiter l'effet de la gravité sur l'ensemble du dispositif et poursuivre l'inspection de la turbomachine.

L'invention a notamment pour but d'apporter une solution simple, économique et efficace à ces problèmes, permettant d'éviter les inconvénients de la technique connue.

A cette fin, elle propose une structure flexible et orientable de contrôle non destructif, comprenant un corps longitudinal et au moins un actionneur permettant de modifier la courbure d'au moins une partie du corps longitudinal, caractérisée en ce que l'actionneur est porté par un support associé au corps longitudinal et dont une partie distale est écartée ou écartable du corps longitudinal et est reliée à une partie du corps longitudinal par un fil de traction.

A la différence de la technique antérieure, l'invention propose non plus d'agencer l'actionneur le long du corps longitudinal mais de le monter sur un support écarté de celui-ci.

Dans cette configuration, le support forme un bras de levier facilitant le fléchissement du corps longitudinal lequel s'effectue au moyen d'une force exercée latéralement par rapport au corps longitudinal et suivant le fil de traction et non plus le long du corps longitudinal ce qui permet d'amplifier le fléchissement du corps longitudinal.

Le rapport de transmission, c'est-à-dire le rapport entre l'angle de fléchissement et la réduction de longueur de l'actionneur, est plus petit que celui de l'art antérieur. Cela permet d'avoir un positionnement beaucoup plus précis de la partie fléchie du corps longitudinal.

L'effort résultant de la commande de l'actionneur est mieux transmis au corps longitudinal. Cette bonne transmission de l'effort autorise la réalisation d'un accrochage stable de la structure flexible par fléchissement et appui d'une partie du corps longitudinal sur une partie fixe d'une structure tridimensionnelle à explorer. Il est ainsi possible de garantir qu'un capteur de contrôle non destructif positionné à l'extrémité distale du corps longitudinal sera en position statique pour réaliser une opération de contrôle non destructif.

Dans l'industrie aéronautique, l'invention rend ainsi possible l'exploration de zones d'une turbomachine qui n'étaient pas accessibles sans démontage de la turbomachine, ce qui contribue à réduire les temps d'immobilisation et les coûts.

Selon une autre caractéristique de l'invention, l'actionneur est en matériau à mémoire de forme.

En variante, l'actionneur peut être mécanique et comprendre un câble relié directement au fil de traction du corps longitudinal et qui s'étend le long de la partie distale du support.

La partie distale du support peut être rigide et dans ce cas l'actionneur peut être un câble tel que décrit ci-dessus.

En variante, la partie distale du support peut être déformable et dans ce cas l'actionneur peut comprendre un matériau à mémoire de forme dont la contraction commande la déformation de la partie distale du support et induit une traction sur le fil de liaison au corps longitudinal.

Dans un mode de réalisation de l'invention, le fil de traction du corps longitudinal est relié à ce dernier à distance de son extrémité distale dans une zone destinée à venir en appui ponctuel ou quasi-ponctuel sur un élément fixe d'une structure à inspecter pour former un point de pivot.

Ce point de pivot est situé entre l'extrémité distale du corps longitudinal et le point de liaison du fil de traction au corps longitudinal. De cette manière, il est possible d'effectuer un balayage angulaire avec l'extrémité distale du corps longitudinal, ce qui peut s'avérer utile lorsque l'on souhaite visualiser en continu une certaine étendue angulaire de l'intérieur de la structure à inspecter.

En variante, le fil de traction est relié à l'extrémité distale du corps longitudinal ou au voisinage de cette extrémité distale.

Avantageusement, les moyens de contrôle non destructif montés à l'extrémité distale du corps longitudinal sont par exemple des sondes à courants de Foucault ou des sondes à ultrasons.

Dans une réalisation pratique de l'invention, le fil de traction est métallique.

Le corps longitudinal peut également comprendre au moins une partie équipée d'au moins un actionneur, du type mécanique ou à mémoire de forme pour réaliser un fléchissement supplémentaire du corps longitudinal.

L'invention sera mieux comprise et d'autres détails, avantages et caractéristiques de l'invention apparaîtront à la lecture de la description suivante faite à titre d'exemple non limitatif, en référence aux dessins annexés dans lesquels :
- les figures 1 et 2 sont des vues schématiques en coupe axiale de deux structures flexibles et orientables selon la technique antérieure ;
- la figure 3 est une vue schématique en coupe axiale d'une structure flexible et orientable selon l'invention ;
- la figure 4 est une vue schématique en coupe axiale de la structure flexible et orientable de la figure 3 en position courbée ;
- la figure 5 est une vue schématique en coupe axiale d'une structure flexible et orientable selon une autre réalisation de l'invention ;
- la figure 6 est une vue schématique en coupe axiale de la structure flexible et orientable de la figure 5 en position courbée ;
- la figure 7 est une vue schématique en coupe axiale et en position d'accrochage d'une structure flexible et orientable selon l'invention ;
- la figure 8 est une vue schématique en coupe axiale d'une structure flexible et orientable selon l'invention en appui sur une structure fixe à explorer ;
- la figure 9 est une vue schématique illustrant le déplacement de la structure flexible et orientable de la figure 8.

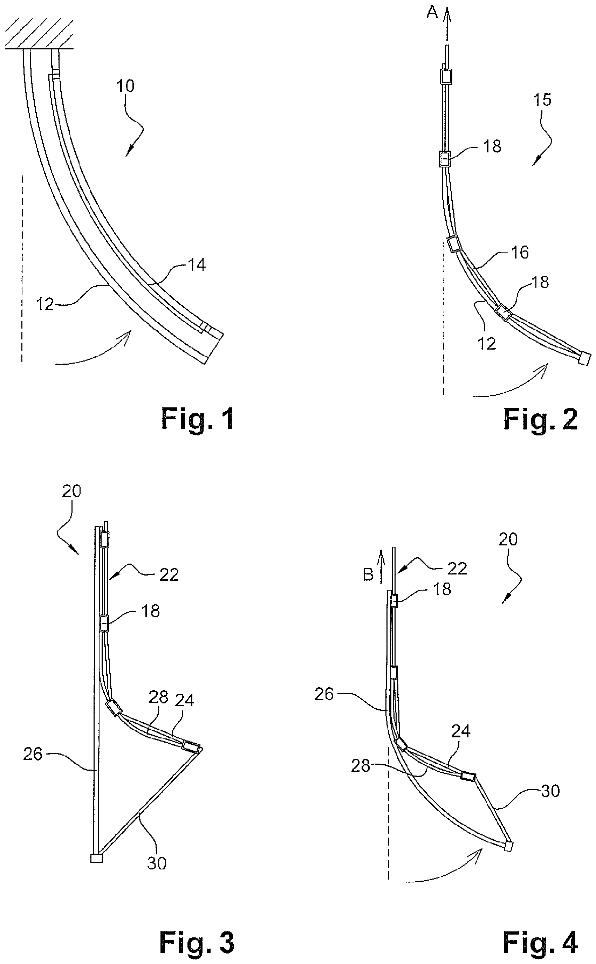

On se réfère tout d'abord à la figure 1 qui représente une structure flexible et orientable 10 de contrôle non destructif de la technique antérieure, comprenant un corps longitudinal 12 équipé d'un actionneur 14 en matériau à mémoire de forme disposé le long du corps longitudinal 12 et à l'intérieur de celui-ci. Cet actionneur 14 se présente par exemple sous la forme d'un fil relié à des moyens d'alimentation électrique permettant un chauffage par effet Joule du fil. Le chauffage du fil 14 induit une contraction de celui-ci ce qui conduit à un fléchissement du corps longitudinal 12.

La figure 2 représente une structure 15 orientable et flexible similaire à celle de la figure 1, à la différence que l'actionneur est un fil métallique 16 s'étendant le long du corps longitudinal 12 jusqu'à l'extrémité distale du corps longitudinal 12. Le fil 16 est maintenu le long du corps longitudinal 12 au moyen d'une pluralité de guides creux 18 fixés sur le corps longitudinal 12. Avec ce type de structure de contrôle, une traction (flèche A) appliquée à l'extrémité proximale du fil 16 conduit à un fléchissement de l'extrémité distale du corps longitudinal 12.

Ces structures 10, 15 ne permettent pas un fléchissement important et un positionnement précis de la partie fléchie du corps longitudinal 12. Elles ne permettent pas non plus de réaliser un accrochage statique stable de la structure de contrôle sur une partie fixe environnante d'une structure mécanique à inspecter pour les raisons exposées en détail précédemment.

L'invention propose d'associer à la structure 20 flexible et orientable un support 22 dont une partie distale 24 est écartée ou écartable du corps longitudinal 26 et porte un actionneur 28, cette partie distale 24 étant reliée au corps longitudinal 26 par un fil de traction 30.

Dans une réalisation de l'invention représentée aux figures 3 et 4, la partie distale 24 est rigide. L'actionneur 28 est un câble qui s'étend le long du support 22 dans des guides creux 18 fixés au support 22. L'actionneur 28 est directement raccordé au niveau de l'extrémité de la partie distale 24 du support 22 au fil 30 de traction relié à l'extrémité distale du corps longitudinal 26.

Une traction (flèche B) appliquée à l'extrémité proximale du câble 28 induit un fléchissement de l'extrémité distale du corps longitudinal 26, le support 22 restant fixe durant cette opération (figure 4).

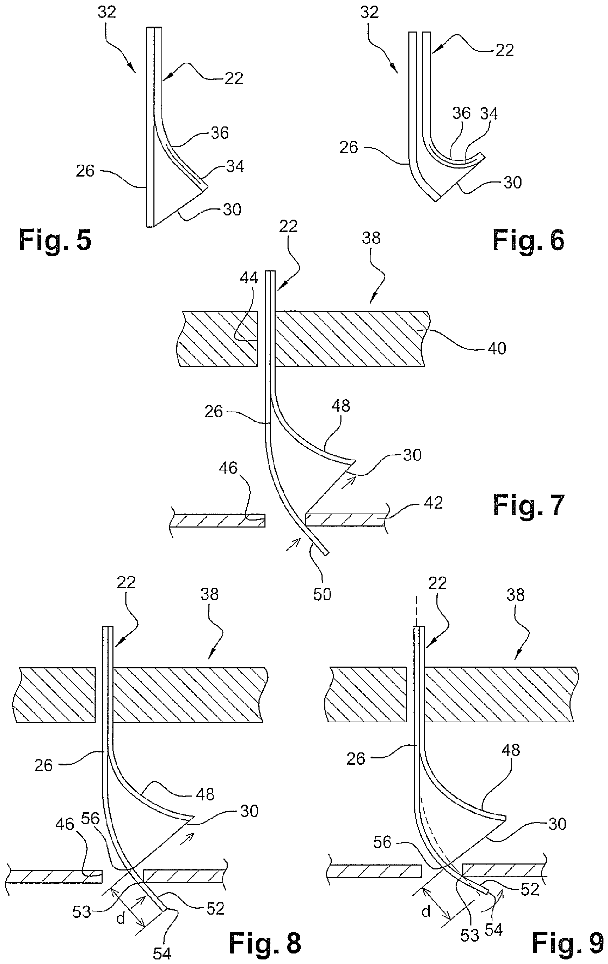

Dans une autre réalisation de l'invention représentée aux figures 5 et 6, la structure flexible et orientable 32 comprend un actionneur 34 se présentant sous la forme d'un fil en matériau à mémoire de forme, intégré à la partie distale 36 du support 22 qui est déformable. La partie distale 36 est reliée au corps longitudinal 26 par un fil de traction 30.

Le chauffage du fil en matériau à mémoire de forme conduit à une contraction de celui-ci induisant une flexion de la partie distale 36 du support 22 provoquant un fléchissement du corps longitudinal 26 (figure 6).

Dans les deux réalisations décrites ci-dessus, le corps longitudinal 26 peut être en matériau élastiquement déformable, ce qui permet son retour en position de repos (figures 3 et 5) lorsque l'on relâche le câble de traction 28 ou bien lorsque l'on arrête le chauffage du fil 34 en matériau à mémoire de forme.

La partie distale 24, 36 du support 22 constitue un bras de levier pour le fléchissement du corps longitudinal 26, permettant un positionnement précis de la partie fléchie du corps longitudinal 26 du fait d'un rapport de transmission (angle de flexion sur longueur de réduction de l'actionneur) plus petit que dans la technique antérieure. Ainsi, pour un même angle de fléchissement du corps longitudinal 26, il est nécessaire d'avoir une réduction plus importante de la longueur de l'actionneur 28, 34 par rapport à la technique antérieure.

La figure 7 représente une coupe axiale d'une structure à inspecter 38 comportant deux parois 40, 42 espacés l'une de l'autre et comportant deux ouvertures 44, 46 de passage d'une structure flexible et orientable selon l'invention.

Dans le montage représenté sur cette figure, le fil de traction 30 est relié à l'extrémité distale du corps longitudinal 26. Le corps longitudinal 26 est inséré dans les deux ouvertures 44, 46 et le support 22 est introduit dans la première ouverture de manière à ce que sa partie distale 48 se situe entre les deux parois 40, 42. La commande de l'actionneur de la partie distale 48 induit une flexion du corps longitudinal 26 et amène l'extrémité distale 50 du corps longitudinal 26 en appui sur le bord de la seconde ouverture. De plus, une partie du fil 30 de traction à proximité immédiate du corps longitudinal vient se plaquer sur la surface interne de la seconde ouverture 46 lors du fléchissement du corps longitudinal 26.

De cette manière, on réalise un positionnement statique et stable du corps longitudinal 26 sur la seconde paroi 42. Un tel positionnement est d'autant plus stable que l'effort d'appui est appliqué latéralement au corps longitudinal 26 depuis la partie distale écartée 48. Cette transmission de l'effort de l'actionneur par le fil 30 de traction est particulièrement importante pour des petits fléchissements, typiquement inférieurs à 30°.

La figure 8 représente une structure à inspecter 38 similaire à celle de la figure 7. Le fil de traction 30 est relié au corps longitudinal 26 à une distance d de son extrémité distale 54. Le corps longitudinal 26 est inséré à l'intérieur de la seconde ouverture 46 de manière à ce que, lors du fléchissement, sa partie d'extrémité 52 vienne en appui ponctuel ou quasi-ponctuel sur un bord (ou arête) de la seconde ouverture (figure 8).

Cette configuration permet la formation d'un point de pivot 53 entre l'extrémité distale 54 du corps longitudinal 26 et le point 56 de liaison du fil 30 de traction au corps longitudinal 26.

Dans le cas où le corps longitudinal 26 est élastiquement déformable, la commande répétée de l'actionneur porté par la partie distale 48 du support 22 permet de réaliser un balayage angulaire avec l'extrémité distale du corps longitudinal 26.

L'actionneur permettant de réaliser le balayage angulaire peut être le même actionneur que celui utilisé pour le fléchissement initial (figure 8) du corps longitudinal dans le cas d'un actionneur mécanique tel qu'un câble, la poursuite de la traction induisant un pivotement de l'extrémité distale du corps longitudinal 26. Dans le cas d'un fléchissement initial (figure 8) réalisé avec un fil en matériau à mémoire de forme, un second fil également en matériau à mémoire de forme peut être intégré à la partie distale 48 du support 22, et l'actionnement répétitif de ce second fil permet de réaliser le balayage angulaire de l'extrémité distale 54 du corps longitudinal 26.

Le montage d'une structure flexible et orientable 20, 32 dans une structure mécanique du type de celle des figures 7 et 8 est réalisé en insérant tout d'abord le corps longitudinal 26 non courbé à travers les première et seconde ouvertures 44, 46. Le support 22 est également inséré à travers la première ouverture 44 par pivotement puis par translation et le fil 30 de traction est ensuite mis en tension pour placer la structure 20, 32 en position d'attente comme sur les figures 3 et 5.

Des moyens de contrôle non destructif (non représentés) peuvent être montés à l'extrémité distale du corps longitudinal 26. Ces moyens sont par exemple des sondes à courants de Foucault ou des sondes à ultrasons.

Dans d'autres variantes de l'invention, la structure flexible 20, 32 comprend au moins un actionneur mécanique 16 ou à mémoire de forme 14 intégré au corps longitudinal 26.

## Revendications

1. Structure flexible et orientable (20, 32) de contrôle non destructif, comprenant un corps longitudinal (26) et au moins un actionneur (28, 34) permettant de modifier la courbure d'au moins une partie du corps longitudinal (26), **caractérisée en ce que** l'actionneur (28, 34) est porté par un support (22) associé au corps longitudinal (36) et dont une partie distale (24, 36) est écartée ou écartable du corps longitudinal (26) de manière à constituer un bras de levier pour le fléchissement du corps longitudinal (26) et est reliée à une partie du corps longitudinal (26) par un fil (30) de traction.

2. Structure selon la revendication 1, **caractérisée en ce que** l'actionneur (34) est en matériau à mémoire de forme.

3. Structure selon la revendication 1, **caractérisée en ce que** l'actionneur (28) est mécanique.

4. Structure selon la revendication 1, **caractérisée en ce que** l'actionneur comprend un câble (28) qui est relié directement au fil (30) de traction du corps longitudinal (26) et qui s'étend le long de la partie distale (24) du support (22).

5. Structure selon la revendication 4, **caractérisée en ce que** la partie distale (24, 36) est rigide ou déformable.

6. Structure selon l'une des revendications 1 à 5, **caractérisée en ce que** le fil (30) de traction du corps longitudinal (26) est relié à ce dernier à une distance d de son extrémité distale.

7. Structure selon l'une des revendications 1 à 6, **caractérisée en ce que** le fil (30) de traction est relié à l'extrémité distale du corps longitudinal (26) ou au voisinage de cette extrémité distale (26).

8. Structure selon l'une des revendications 1 à 7, **caractérisée en ce que** l'extrémité distale du corps longitudinal (26) est pourvue de moyens de contrôle non destructif tels par exemple que des sondes à courants de Foucault ou à ultrasons.

9. Structure selon l'une des revendications 1 à 8, **caractérisée en ce que** le fil (30) de traction est métallique.

10. Structure selon l'une des revendications 1 à 9, **caractérisée en ce que** le corps longitudinal (26) comprend au moins une partie équipée d'au moins un actionneur, du type mécanique (16) ou à mémoire de forme (14).

## Patentansprüche

1. Flexible und schwenkbar Struktur (20, 32) zur nicht destruktiven Prüfung, enthaltend einen longitudinalen Körper (26) und zumindest ein Aktuator (28, 34), mit dem die Krümmung zumindest eines Abschnitts des longitudinalen Körpers (26) verändert werden kann, **dadurch gekennzeichnet, dass** das Aktuator (28, 34) von einem Träger (22) getragen wird, der dem longitudinalen Körper (36) zugeordnet ist und von dem ein distaler Abschnitt (24, 36) vom longitudinalen Körper (26) beabstandet ist oder beabstandet werden kann, so dass er einen Hebelarm zum Umbiegen des longitudinalen Körpers (26) bildet, und über einen Zugdraht (30) mit einem Abschnitt des longitudinalen Körpers (26) verbunden ist.

2. Struktur nach Anspruch 1, **dadurch gekennzeichnet, dass** das Aktuator (34) aus einem Material mit Formgedächtnis besteht.

3. Struktur nach Anspruch 1, **dadurch gekennzeichnet, dass** das Aktuator (28) mechanisch ausgeführt ist.

4. Struktur nach Anspruch 1, **dadurch gekennzeichnet, dass** das Aktuator (28) ein Seil enthält, das direkt mit dem Zugdraht (30) des longitudinalen Körpers (26) verbunden ist und sich entlang des distalen Abschnitts (24) des Trägers (22) erstreckt.

5. Struktur nach Anspruch 4, **dadurch gekennzeichnet, dass** der distale Abschnitt (24, 36) starr oder verformbar ist.

6. Struktur nach einem der Ansprüche 1 bis 5, **dadurch gekennzeichnet, dass** der Zugdraht (30) des longitudinalen Körpers (26) mit letzterem in einem Abstand d von seinem distalen Ende verbunden ist.

7. Struktur nach einem der Ansprüche 1 bis 6, **dadurch gekennzeichnet, dass** der Zugdraht (30) mit dem distalen Ende des longitudinalen Körpers (26) oder in der Nähe dieses distalen Endes (26) verbunden ist.

8. Struktur nach einem der Ansprüche 1 bis 7, **dadurch gekennzeichnet, dass** das distale Ende des longitudinalen Körpers (26) mit Einrichtungen zur nicht destruktiven Prüfung versehen ist, wie etwa mit Wirbelstrom- oder Ultraschallsonden.

9. Struktur nach einem der Ansprüche 1 bis 8, **dadurch gekennzeichnet, dass** der Zugdraht (30) aus Metall besteht.

10. Struktur nach einem der Ansprüche 1 bis 9, **dadurch gekennzeichnet, dass** der longitudinale Körper (26) zumindest einen Abschnitt enthält, der mit zumindest einem Aktuator mechanischer Art (16) oder mit Formgedächtnis (14) ausgestattet ist.

## Claims

1. A flexible and steerable structure (20, 32) for nondestructive inspection, the structure comprising a longitudinal body (26) and at least one actuator (28, 34) enabling the curvature of at least a portion of the longitudinal body (26) to be modified, the structure being **characterized in that** the actuator (28, 34) is carried by a support (22) associated with the longitudinal body (26) and having a distal portion (24, 36) that is spaced apart or that is spaceable apart from the longitudinal body (26) so as to form a lever arm for the flection of the longitudinal body(26) and that is connected to a portion of the longitudinal body (26) by a traction line (30).

2. A structure according to claim 1, **characterized in that** the actuator (34) is made of shape-memory material.

3. A structure according to claim 1, **characterized in that** the actuator (28) is mechanical.

4. A structure according to claim 1, **characterized in that** the actuator comprises a cable (28) that is connected directly to the traction line (30) of the longitudinal body (26) and that extends along the distal portion (24) of the support (22).

5. A structure according to claim 4, **characterized in that** the distal portion (24, 36) is rigid or deformable.

6. A structure according to any one of claims 1 to 5, **characterized in that** the traction line (30) of the longitudinal body (26) is connected thereto at a distance d from its distal end.

7. A structure according to any one of claims 1 to 6, **characterized in that** the traction line (30) is connected to the distal end of the longitudinal body (26) or to the vicinity of said distal end (26).

8. A structure according to any one of claims 1 to 7, **characterized in that** the distal end of the longitudinal body (26) is provided with non-destruction inspection means, such as, for example eddy current or ultrasound probes.

9. A structure according to any one of claims 1 to 8, **characterized in that** the traction line (30) is metallic.

10. A structure according to any one of claims 1 to 9, **characterized in that** the longitudinal body (26) includes at least one portion that is fitted with at least one actuator of the mechanical or shape-memory material type (16 or 14).
